# EUROPEAN PATENT APPLICATION

(11) **EP 1 263 239 A2**
(43) Date of publication of application: **04.12.2002**
(21) Application number: 02354086.7
(22) Date of filing: 28.05.2002
(51) Int. Cl.: H04N 7/50

(54) **Image compression system**

(30) Priority: 30.05.2001 JP 2001161829; 08.03.2002 JP 2002063116
(71) Applicant: Nippon Telegraph and Telephone Corporation, Tokyo 100-8116 (JP)
(72) Inventor: Nakata, Shunji, NTT Interllectual Property Center, Musashino-shi, Tokyo 180-8585 (JP)
(74) Representative: de Beaumont, Michel

(57) **Abstract**

Each of a transmit side and a receive side has a basic frame memory which stores a basic frame, and an accumulated frame memory which stores a predicted P-picture. An I-picture is inter-frame compressed by taking difference between the current input I-picture and a basic frame stored in the basic frame memory. An input P-picture is inter-frame compressed by taking difference between the current input P-picture and a prediction frame which is stored in the accumulated frame memory storing a sum of said prediction frame and a de-compressed difference signal. An I-picture which does not take difference from a previous frame but a fixed basic frame is inserted in every predetermined P-pictures so that a compression errors of P-pictures is not accumulated large. An I-picture may be substituted by a plurality of intra-slices which shifts one by one so that they cover a whole frame. The difference for compression may be taken either for each frame, or for each macroblock in a frame. A motion compensation can be combined with the above compression system.

## Description

### BACKGROUND OF THE INVENTION

The present invention relates to image compression system for compressing and/or de-compressing image information.

Lately, it is requested to obtain a real time image information obtained by a live camera, and/or a monitor camera through internet, and therefore, it is essential to compress or reduce image information for transmission.

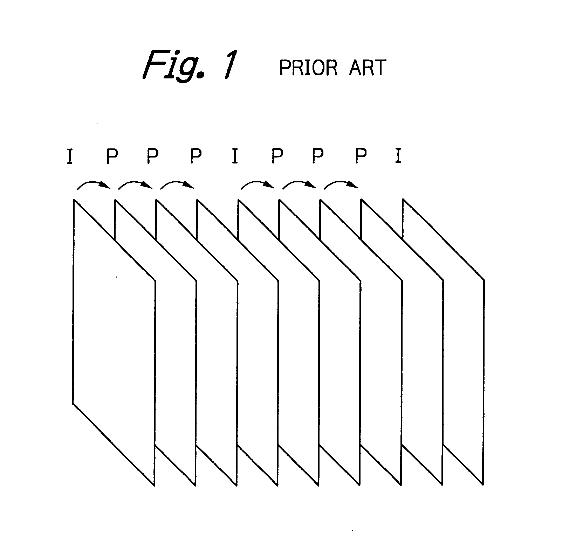

A prior art such as H.261 standard and MPEG standard, which is used in a TV phone, is shown in Fig. 1, in which a series of frames consist of an I-picture and succeeding P-pictures. A P-picture is inter-frame compressed by using a prediction frame obtained by a previous frame. P-pictures would have large errors because of the accumulation of errors of prediction, therefore, an I-picture which is only intra-frame compressed but not inter-frame compressed, is inserted in every predetermined number of frames, for instance, in every 15 frames. As an I-picture is not inter-frame compressed, but only intra-frame compressed, the compression ratio of an I-picture and the total pictures including the I-picture and the P-pictures is not enough, and further highly compression is requested.

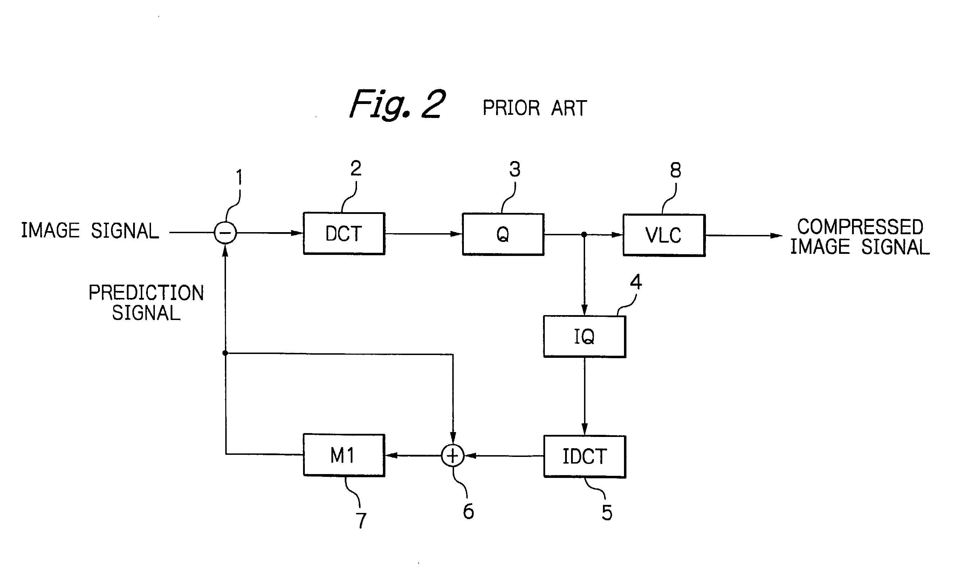

A prior image compression circuit for a video picture is described in accordance with Fig. 2. In Fig. 2, an input image signal is applied to a subtractor 1 which further receives a prediction signal. An output of the subtractor 1, or the difference between the input image signal and the prediction signal, is applied to a discrete cosine transform (DCT) circuit 2 which provides a DCT coefficient, which is quantized by a quantizer 3. The compressed signal of the output of the quantizer 3 is transmitted to a communication line through a variable length coder 8. Further, an output of the quantizer 3 is applied to an inverse quantizer 4 and an inverse discrete cosine transform (IDCT) circuit 5 for de-compression. An adder 6 provides a sum of an output of the inverse discrete cosine transform circuit 5 and the prediction signal, and the sum is stored in an accumulative frame memory 7, which stores a frame of a prediction signal. An output of the memory 7 is used as a prediction signal for compressing a next frame.

Thus, an input image is compressed by using a prediction signal obtained by a previous image.

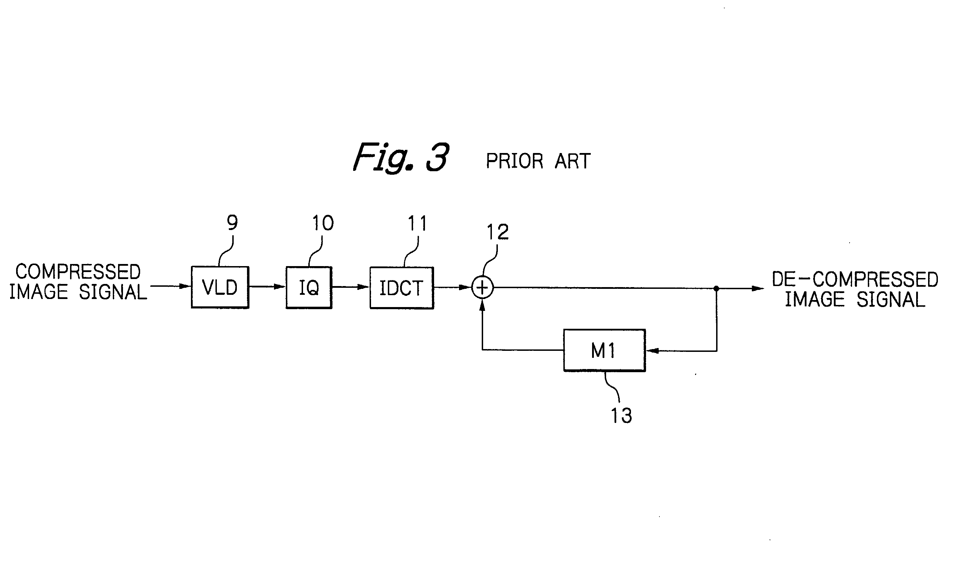

Fig. 3 is a prior de-compression circuit for de-compressing an image signal compressed by the circuit of Fig. 2. In Fig. 3, a receive signal is applied to a variable length decoder 9, an output of which is applied to an inverse quantizer 10. An output of the inverse quantizer 10 is applied to an inverse discrete cosine transform circuit 11, and output of which is applied to an adder 12 which further receives a prediction signal from an accumulative frame memory 13. An output of the adder 12 is stored in the accumulative frame memory 13 for the prediction of a next frame, and further, said output of the adder 12 provides a de-compressed image signal.

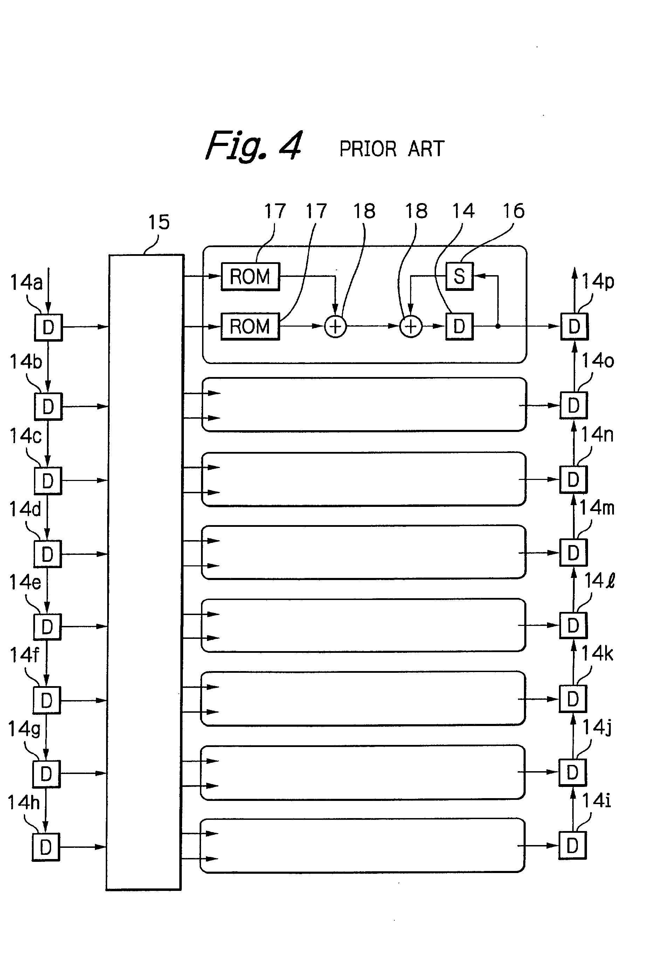

Fig. 4 shows a block diagram of a 1D discrete cosine transform circuit, which is a component of the discrete cosine transform circuit 2. The embodiment is an eight-points discrete cosine transform circuit, which accepts eight input data into registers 14a through 14h. An output of the registers 14a through 14h is applied to an arithmetic circuit through a bitslice distributor 15. The arithmetic circuit which comprises a register 14, a shifter 16, a ROM 17, and an adder 18 et al, calculates a DCT coefficient by using DA (Distributed Arithmetic method) which provides a product-sum for each bit. The DCT coefficient thus calculated is applied to a shift register having registers 14i through 14p. An output of the shift register is stored in a transposed RAM which exchanges a row and a column. Then, the 1D DCT is carried out again so that a 2D DCT is obtained.

An inverse 1D discrete cosine transform circuit for an inverse discrete cosine transform circuit 11 is similar to that of Fig. 4, and an inverse 1D discrete cosine transform is carried out. As an IDCT calculation has the similar calculation way (product-sum of a matrix) to that of a DCT calculation, thus, an IDCT calculation is carried out by using said distributed arithmetic method like said DCT calculation.

### SUMMARY OF THE INVENTION

It is an object, therefore, of the present invention to provide a new and improved image compression system by overcoming the disadvantages and limitations of a prior image compression system.

It is also an object of the present invention to provide an image compression system which provides large compression ratio of an image information.

It is also an object of the present invention to provide an image compression system which provides large compression ratio for not only a P-picture, but also an I-picture.

The above and other objects are attained by an image compression system for compressing a series of image frames including an I-picture and at least one P-picture following said I-picture comprising the steps of; taking difference between a prediction frame signal read out of an accumulative frame memory and a current input P-picture; processing the difference by a DCT circuit, quantizing an output of the DCT circuit and forwarding quantized frame as compressed signal; inverse-quantizing said compressed signal; processing an inverse-quantized signal by an IDCT circuit; adding an output of the IDCT circuit to said prediction signal; updating said accumulative frame memory as a next prediction frame by storing a sum of said addition into said accumulative frame memory; wherein a basic frame memory which stores a basic frame is provided for compressing said I-picture; said basic frame memory is selected as a prediction frame when said I-picture is compressed, or said accumulative frame memory is selected as a prediction frame when said P-picture is compressed.

The present invention provides further an image de-compressing system which de-compresses a series of image frames comprising the steps of; inverse-quantizing a received compressed frame; processing an inverse-quantized signal by an IDCT circuit, adding an output of the IDCT circuit to an output of an accumulative frame memory when a P-picture is received, or to an output of a basic frame memory when an I-picture is received, so that a de-compressed frame is obtained; updating said accumulative frame memory by a sum of an output of said adder.

It is supposed that a basic frame memory in a de-compression system stores the same basic frame as that of a compression system.

In one embodiment of the present invention, a part of a frame is assigned to an intra-slice, location of said intra-slice in each frame is shifted for each frame so that a plurality of intra-slice areas cover a whole frame and function as an I-frame, compression of said intra-slice area is carried out by using said basic frame memory, and compression of other area is carried out by using said accumulative frame memory.

In one embodiment, said difference is taken for each macroblocks in a frame, instead of for each frames.

In one embodiment, a motion compensation system is combined with the current invention.

### BRIEF DESCRIPTION OF THE DRAWINGS

The foregoing and other objects, features, and attendant advantages of the present invention will be appreciated as the same become better understood by means of the following description and accompanying drawings wherein;
Fig. 1 is an explanatory figure of a prior compression system using an I-picture and a P-picture,
Fig. 2 is a block diagram of a prior image compression circuit,
Fig. 3 is a block diagram of a prior image de-compression circuit,
Fig. 4 is a block diagram of a prior discrete cosine transform (DCT) circuit,
Fig. 5 is an explanatory figure of a compression system using an I-picture, a P-picture and a basic frame according to the present invention,
Fig. 6 is another explanatory figure of a compression system substituting a plurality of intra-slices in a frame with an I-picture,
Fig. 7 is a block diagram of an image compression system according to the present invention,
Fig. 8 is a block diagram of an image de-compression system according to the present invention,
Fig. 9 shows effect of image compression in the embodiment of Fig. 7 and Fig. 8,
Fig. 10 is an explanatory figure showing image compression effect when an inter-frame difference or an intra-frame difference for image compression is taken for each macroblock,
Fig. 11 is another explanatory figure showing image compression effect when a motion compensation is combined to the present image compression system,
Fig. 12 is a block diagram of another embodiment of an image compression circuit according to the present invention,
Fig. 13 is a block diagram of still another embodiment of an image compression circuit according to the present invention,
Fig. 14 is a block diagram of still another embodiment of an image compression circuit according to the present invention,
Fig. 15 is a block diagram of still another embodiment of an image compression circuit combining motion compensation according to the present invention,
Fig. 16 is a block diagram of still another embodiment of an image compression circuit combining motion compensation according to the present invention,
Fig. 17 is a block diagram of another embodiment of an image de-compression circuit combining motion compensation according to the present invention, and
Fig. 18 is a block diagram of still another embodiment of an image de-compression circuit combining motion compensation according to the present invention.

### DESCRIPTION OF THE PREFERRED EMBODIMENTS

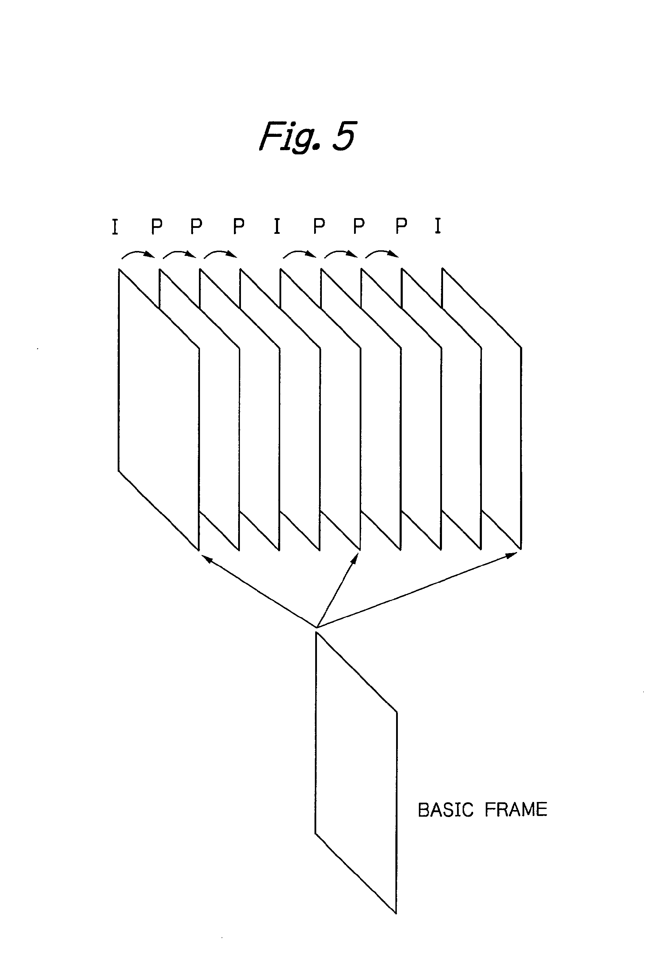

An important idea of the present invention is shown in Fig. 5, in which a basic frame is stored in a compression circuit, and the same basic frame as that of the compression circuit is stored in a de-compression circuit. A basic frame is, for instance, a picture of background of an image, or a typical picture.

A sequence of images are classified into an I-picture and a P-picture, as is the case of a prior art of Fig. 1. An image may include a B-picture, although the embodiments including an I-picture and a P-picture are described for the sake of simplicity of explanation. An I-picture is inserted in the sequence of images for a predetermined period, for instance, for every 15 frames. A P-picture is compressed by taking difference between a current P-picture and an immediate previous frame (I-picture or P-picture). This is called an inter-frame mode compression, or inter-mode compression. An I-picture is not compressed by using a previous frame. An arrow in the figure shows that a frame indicated by an arrow is compressed by taking difference between an input frame and a frame originating an arrow for image compression. As shown in Fig. 5, a P-picture is compressed by taking difference between an input frame and an immediate previous I-picture, or an immedidate previous P-picture.

The feature of the present invention is that an I-picture is compressed by taking difference between an input I-picture and a basic frame which is fixed and is stored in a compression circuit. Preferably, a basic frame is updated in every predetermined time, for instance, for every minute. The de-compression of an I-picture is carried out by using the same basic frame stored in a de-compression circuit.

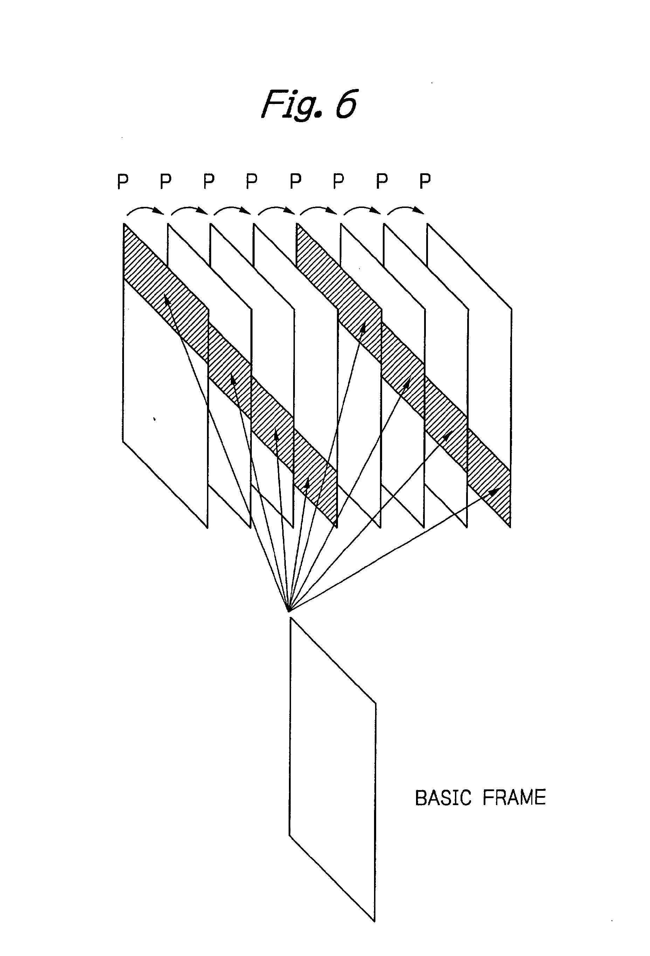

Fig. 6 is a modification of Fig. 5. The feature of Fig. 6 is that no specific I-picture is provided, but a part of a P-picture, called an intra-slice, functions similar to that of an I-picture. An intra-slice is shown by hatched area in the figure, and the intra-slice is shifted for each P-picture so that a plurality of intra-slices cover a whole frame.

In compressing each frame, an intra-slice area is compressed by taking difference between an input frame and a corresponding area of a basic frame, and other areas of the input frame are compressed by taking difference between the input frame and the corresponding areas of the previous frame.

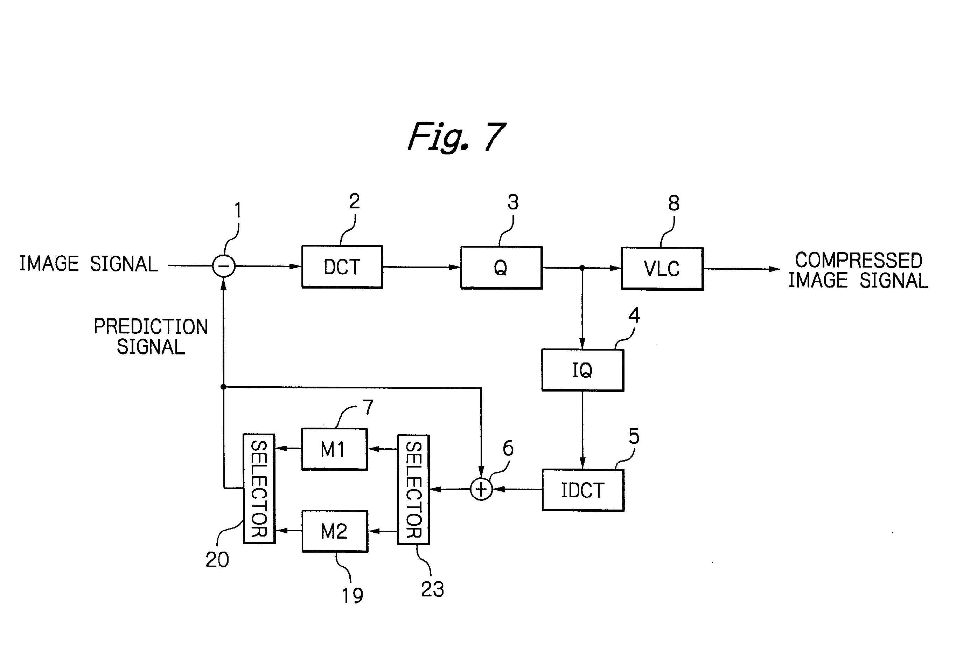

Fig. 7 is a block diagram of an image compression circuit according to the present invention. In the figure, an input current image frame is applied to a subtractor 1 which takes difference between the input current image frame and a prediction frame which is stored either in an accumulative frame memory (M1) 7 or a basic frame memory (M2) 19. The difference signal of the output of the subtractor 1 is applied to compression means having a discrete cosine transform (DCT) circuit 2 and a quantizer 3. The compressed signal of an output of the quantizer 3 is applied to a variable length coder 8 which provides an output compressed signal for transmission. An output of the quantizer 3 is further applied to de-compression means having an inverse-quantizer 4 and an inverse discrete cosine transform (IDCT) circuit 5. An adder 6 provides a sum of an output of the inverse discrete cosine transform (IDCT) circuit 5 and a prediction frame.

The sum of the output of the adder 6 is applied either to the accumulative frame memory (M1) 7 when a P-picture is compressed so that the accumulative frame memory (M1) 7 is updated, or the basic frame memory (M2) 19 when the basic frame memory (M2) 19 is updated, through a selector 23 which selects one of the accumulative frame memory (M1) 7 and the basic frame memory (M2) 19. The basic frame memory (M2) 19 is updated in every predetermined time (for instance, one minute), or when quantity of compressed data exceeds a predetermined threshold.

It should be understood that the selector 23 is optional, and an output of the adder 6 may be directly coupled with the accumulative frame memory (M1) 7. In that case, the basic frame memory (M2) is not updated.

A selector 20 selects a prediction frame either from an output of the accumulative frame memory (M1) 7 when a P-picture is compressed, or from an output of the basic frame memory (M2) 19 when an I-picture is compressed.

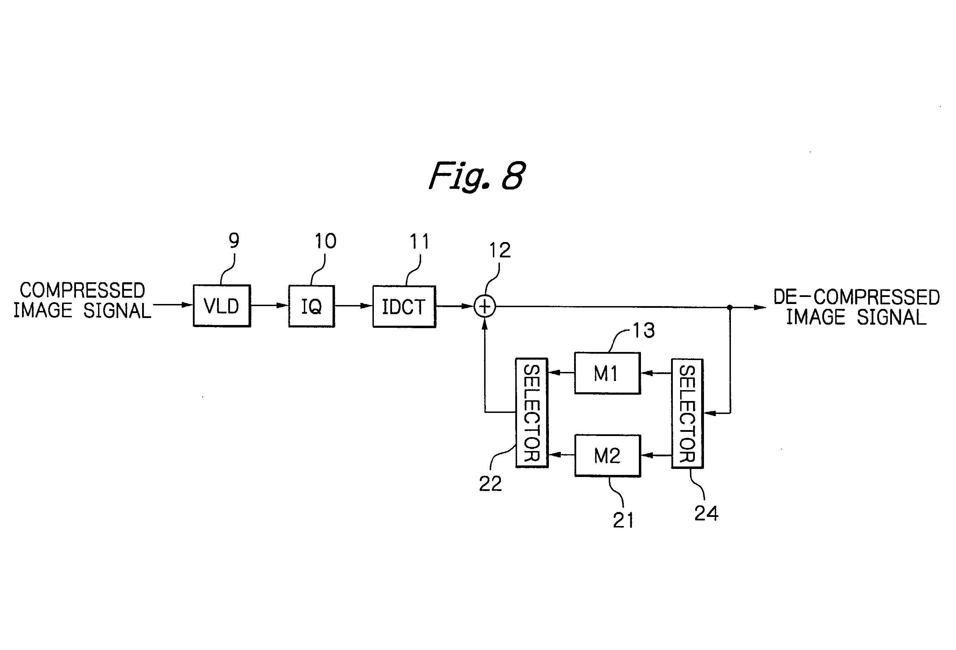

Fig. 8 is a block diagram of a de-compression circuit for de-compressing an image frame compressed by the circuit of Fig. 7.

In Fig. 8, a compressed image frame is applied to a variable length decoder 9 which decodes a received signal and provides a quantized signal, which is applied to de-compression means having an inverse-quantizater 10 and an inverse discrete cosine transform (IDCT) circuit 11 so that a difference frame is provided. An adder 12 provides a sum of the difference frame which is an output of the inverse discrete cosine transform (IDCT) circuit 11 and a prediction frame which is selected by a selector 22 from an output of an accumulative frame memory (M1) 13 and an output of a frame memory (M2) 21. A selector 22 selects an output of the accumulative frame memory (M1) 13 when a P-picture is de-compressed, or an output of the basic frame memory (M2) 21 when an I-picture is de-compressed. It is supposed that the basic frame memory (M2) 21 stores the same image as that of the basic frame memory (M2) 19 in Fig. 7 in a compression circuit.

The selector 24 is optional. When the selector 24 is omitted, the sum of an output of the adder 12 is coupled with the accumulative frame memory (M1) 13, and the basic frame memory (M2) 21 is not updated.

When the basic frame memory (M2) 21 is updated, the selector 24 selects the basic frame memory 21 so that it is updated by a received signal. The basic frame memory (M2) 21 is updated, for instance, in every minute. Of course the basic frame memory (M2) 21 in a de-compression circuit is updated at the same time as the update of the basic frame memory (M2) 19 in a compression circuit.

In one embodiment, an I-picture is inserted in every 15 frames. A GOP is defined by 15 number of frames including an I-picture and 14 number of P-pictures succeeding the I-picture. Assuming that an original frame has 20 Mbits, and an I-frame is compressed to 1 Mbits by an intra-frame compression and a P-frame is compressed to around 10 Kbits by an inter-frame compression, then, a GOP has 1 (Mbits) + 14x10 (Kbits) = 1.14 Mbits in a prior art. On the other hand, according to the present invention, an I-picture is compressed similar to P-pictures, since an I-picture is compressed by an inter-frame compression by using a basic frame memory. Assuming that an I-picture according to the present invention is compressed to 10 Kbits similar to a P-picture, a GOP has 15x10 (Kbits) = 0.15 Mbits. Therefore, an information quantity of a GOP is compressed to only 13 % of that of a prior art.

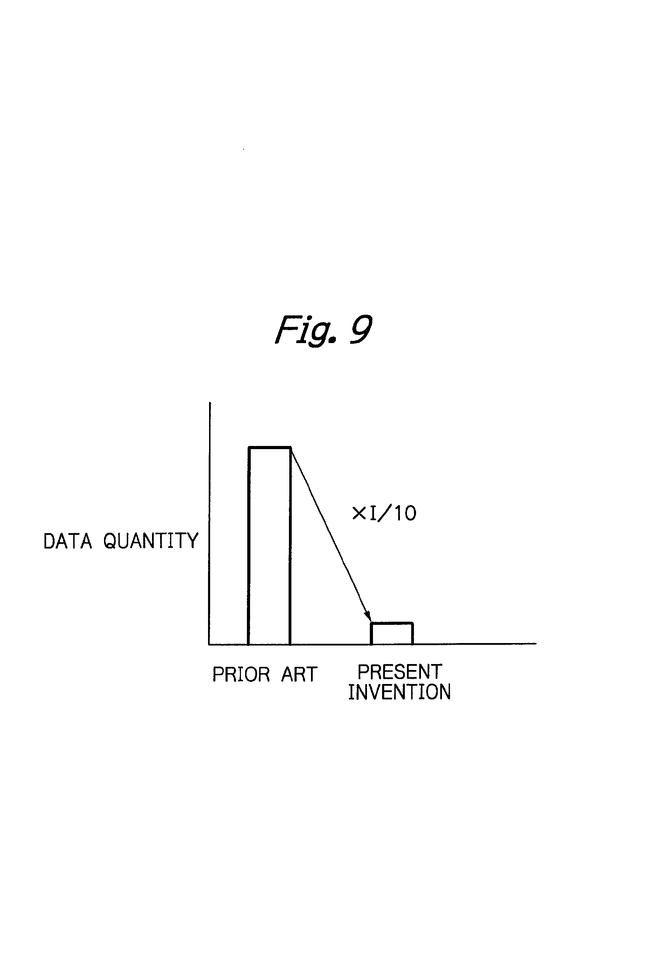

Fig. 9 shows the relations of the above analysis, and it is clear that an information quantity of a frame is compressed around 1/10 of that of a prior art.

It is clear that the present invention is effective to the sequence of images including B-picgtures.

Now, the modifications of the present invention for further improving the compression ratio are described.

A first basic idea of the modifications is to divide a frame into a plurality of macroblocks, and one of inter-mode compression and intra-mode compression is selected for each macroblock so that the compressed macroblock has smaller information quantity.

Another basic idea of the modifications is the combination of motion compensation with the current invention. Motion compensation itself is conventional.

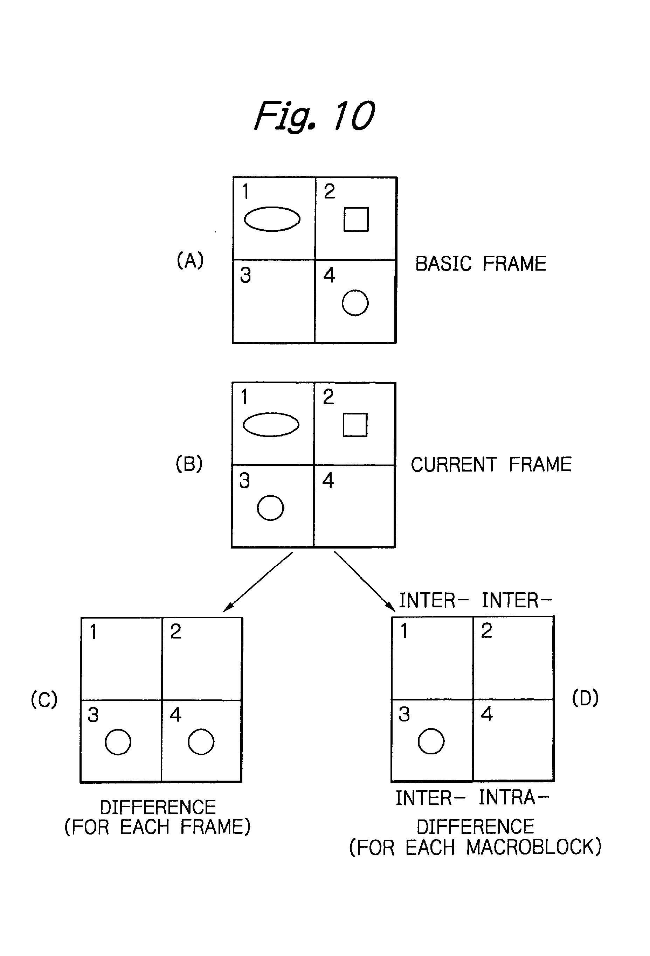

In Fig. 10(A), it is assumed for the sake of explanation that a frame is divided into four macroblocks (1, 2, 3, 4), two blocks in horizontal direction and two blocks in vertical direction. Further, it is assumed that a basic frame (Fig. 10(A)) has an ellipse in the first macroblock 1, a rectangle in the second macroblock 2, null in the third macroblock 3, and a circle in the fourth block 4, and a current frame (Fig. 10(B)) is the same as the basic frame in the first macroblock 1 and the second macroblock 2, but the third macroblock 3 has a circle, and the fourth macroblock 4 is null.

Therefore, the difference between the basic frame and the current frame is shown in Fig. 10(C), when the difference is taken for each frame, or all the macroblocks are compressed through an inter-mode.

On the other hand, when an inter-mode compression and an intra-mode compression is selected for each macroblock so that compressed information quantity is smaller, the difference frame is shown in Fig. 10(D), wherein first, second and third macroblocks 1, 2, and 3 are compressed through an inter-mode, and the fourth macroblock 4 is compressed by an intra-mode. In this case, the fourth block 4 is null, since the fourth block of the current frame (Fig. 10(B)) is null.

It is clear that Fig. 10(D) has less information quantity or higher compression ratio than that of Fig. 10(C).

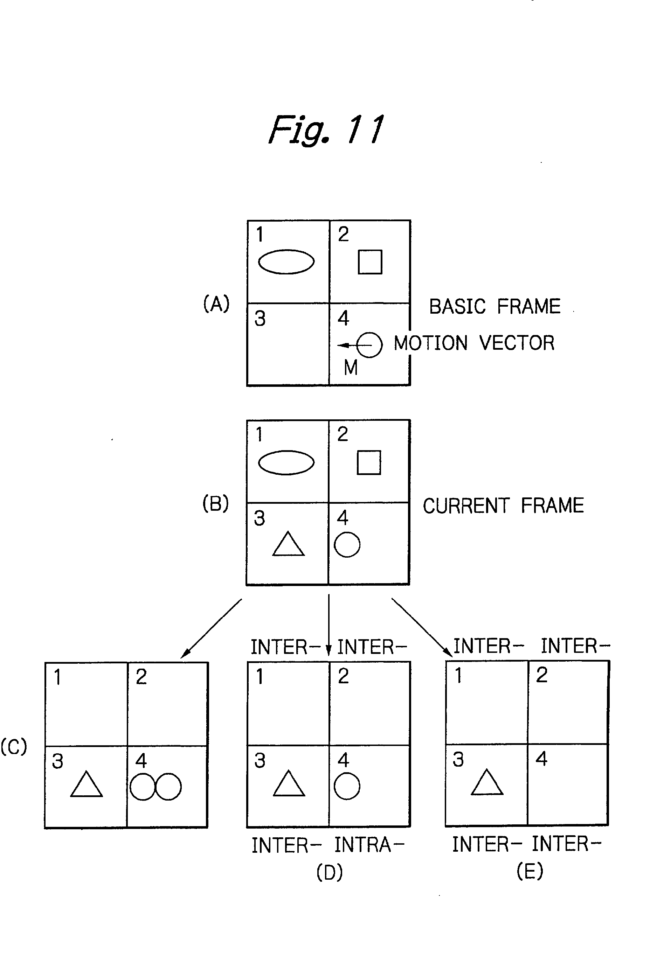

Fig. 11 shows the explanation of an effect of motion compensation for further improving compression ratio.

In Fig. 11, the basic frame in Fig. 11(A) is the same as that of Fig. 10(A), except that a circle in the fourth block is moving and has a motion vector M. In the current frame of Fig. 11(B), the first and the second macroblocks 1 and 2 are the same as those of the basic frame, but a triangle appears in the third macroblock 3, and the location of the circle in the fourth macroblock 4 is somewhat shifted from that of the basic frame.

In the above assumption, the difference frame between the basic frame and the current frame is shown in (C), (D) and (E). Fig. 11(C) shows the simple difference for each frame, Fig. 11(D) shows the difference for each macroblocks selecting one of an inter-mode and an intra-mode as described in Fig. 10. Fig. 11(E) is the difference frame taking an inter-mode for each macroblocks taking motion compensation. A circle does not appear in Fig. 11(E), because of the use of motion compensation.

It is clear that information quantity of the difference frame in Fig. 11(E) is smaller than that of Fig. 11(D).

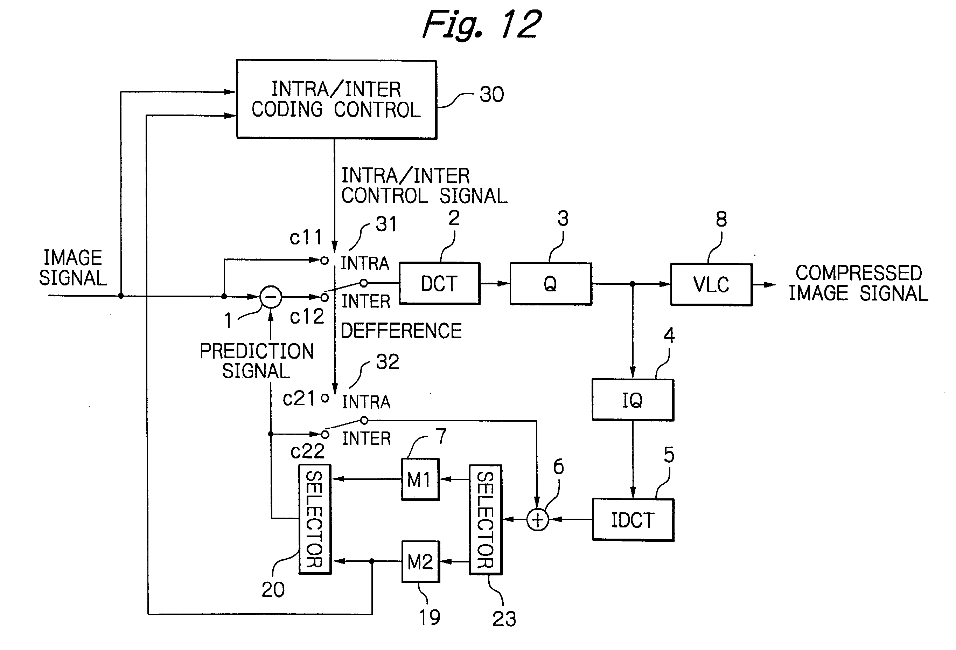

Fig. 12 is a block diagram of another embodiment of an image compression circuit according to the present invention. In the figure, a subtractor 1, a discrete cosine transform circuit 2, a quantizer 3, an inverse quantizer 4, an inverse discrete cosine transform circuit 5, an adder 6, an accumulative frame memory 7, a variable length coder 8, a basic frame memory 19, and selectors 20 and 23 are the same as those in Fig. 7, and the operation of those members are the same as those in Fig. 7.

The essential feature of the embodiment of Fig. 12 is the presence of an intra/inter coding control 30 which accepts an input current image signal, and a basic frame signal of an output of the basic frame memory 19, in order to determine which mode, an inter-mode which takes difference for each macroblock, or an intra-mode which takes no difference for each macro-block in a frame, is taken. The selection of the operation modes, an inter-mode or an intra-mode, is determined for each macroblock in an I-picture so that the data quantity at the output of the subtractor 1 becomes smaller. In other words, when the data quantity at the output of the subtractor 1 is equal to or smaller than the data quantity of an input current frame signal, an inter-mode is selected, otherwise, an intra-mode is selected. In the case of Fig. 10(D), an inter-mode is selected in the macroblocks 1, 2 and 3, and an intra-mode is selected in the macroblock 4. In the macroblock 4, it should be noted that the data quantity is null when an intra-mode is selected, while it would have a circle when an inter-mode is selected.

Another feature of the embodiment of Fig. 12 is the presence of switches 31 and 32 which operate under control of said intra/inter coding control 30.

The switches 31 and 32 are connected to C12 and C22, respectively, in the inter-mode, and C11 and C21, respectively, in the intra-mode, under the control of said intra/inter coding control 30. Thus, in the inter-mode, an output of the subtractor 1 is applied to the discrete cosine transform circuit (DCT) 2, and in the intra-mode, an input current frame signal is applied to the discrete cosine transform circuit (DCT) 2.

In case of an I-picture, an inter-mode or an intra-mode is selected for each macroblock depending upon which mode provides smaller information quantity for each macro-block. When an inter-mode is selected, difference between an input current frame signal and a basic frame signal is taken for each macroblock, and when an intra-mode is selected, an input current frame signal is directly transferred to the discrete cosine transform circuit (DCT) 2. The information which mode, an inter-mode or an intra-mode, is taken is transmitted to a receive side for de-compression. Therefore, the embodiment of Fig. 12 provides the improved data compression as compared with that of Fig. 7.

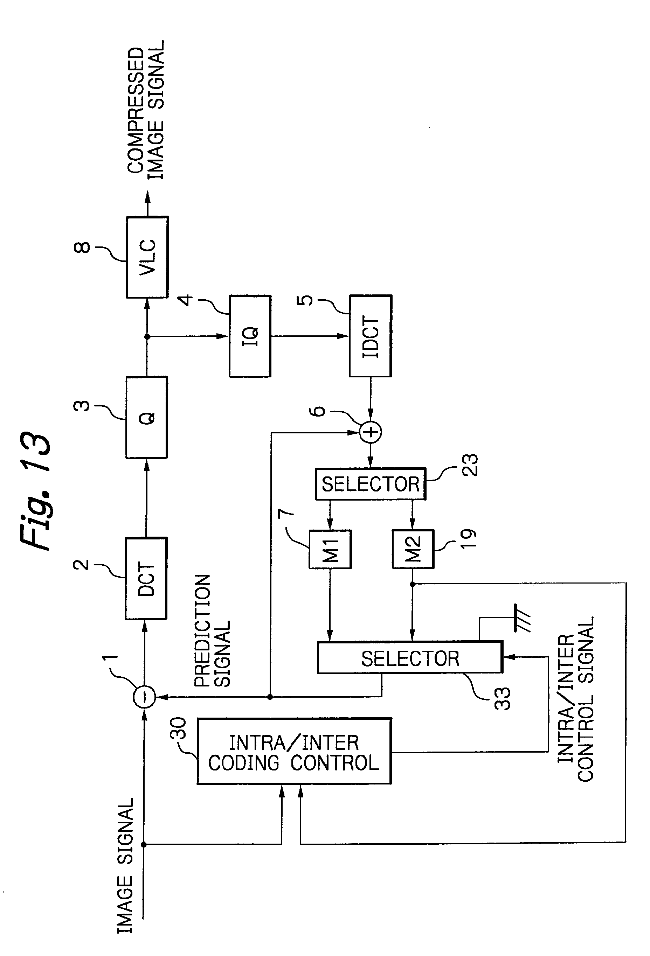

Fig. 13 shows a modification of an image compression circuit of Fig. 12.

The feature of Fig. 13 is that a selector 33 functions as switches 31 and 32 in Fig. 12. Further, the selector 33 doubles as the selector 20 in Fig. 12. The selector 33 couples one input of the subtractor 1 with one of an output of an accumulative frame memory 7, an output of a basic frame memory 19, and null (ground), according to the control of an intra/inter coding control 30. In an inter-mode where difference is taken, the selector 33 couples an output of the accumulative frame memory 7 for a P-picture or an output of the basic frame memory 19 for an I-picture with one input of the subtractor 1. In an intra-mode where no difference is taken, the selector 33 couples null (ground) to one input of the subtractor 1. Thus, in an inter-mode, an output of the accumulative frame memory 7 or an output of the basic frame memory 19 is coupled with the subtractor 1, and in an intra-mode the null is coupled with the subtractor 1 so that no difference is taken and the subtractor 1 provides an input signal itself as an output of the subtractor 1.

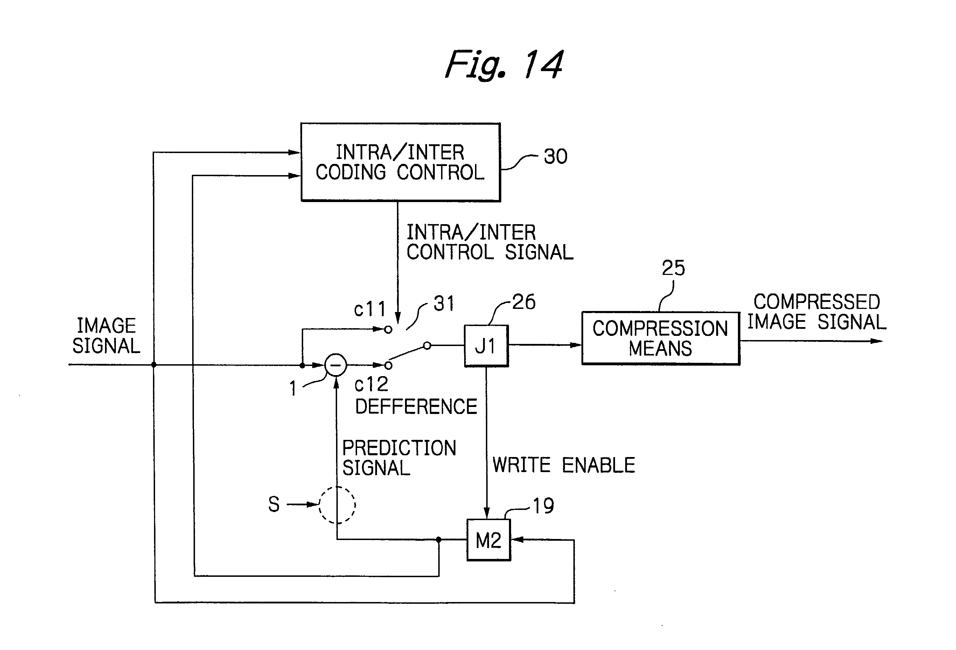

Fig. 14 is a block diagram of still another embodiment of an image compression circuit according to the present invention.

The feature of Fig. 14 is that frames are not classified into a P-picture and an I-picture, but any input frame is handled as if it is an I-picture, and is compared with a basic frame. A switch 31 is connected to a contact C11 in an intra-mode, or a contact C12 in an inter-mode.

In an inter-mode, an input image signal is applied to a subtractor 1 which provides difference between an input image signal and a prediction signal which is read out of a basic frame memory (M2) 19. The basic frame memory (M2) 19 is the same as that of Fig. 7, and stores a background scene of a frame, or a typical picture. The difference is, through a switch 31 and a basic frame update decision circuit (J1) 26, applied to compression means 25 which is implemented by circuits having the function of a discrete cosine transform circuit 2 and a quantizer 3. An output of compression means 25 is transmitted to a receive side. The basic frame update decision circuit (J1) 26 updates the basic frame memory 19 when the information quantity of the difference exceeds a predetermined threshold by activating a write enable signal so that a current frame is substituted with a basic frame.

In an intra-mode, the switch 31 is connected to the contact C11, and an input image signal is directly applied to the compression means 25.

It should be noted in Fig. 14 that no accumulative frame memory is provided, and a prediction frame is always a basic frame.

An intra/inter coding control 30 receives an input image signal and an output of the basic frame memory 19, and compares two inputs for each macroblock so that an operational mode, an inter-mode or an intra-mode, is selected for each macroblock in order to provide smaller information quantity for each macroblock. The intra/inter coding control 30 itself and the control of the switch by the control 30 are the same as those in the embodiment of Fig. 12.

As a modification of Fig. 14, a switch 31 may be omitted so that an output of the subtractor 1 is directly connected to an input of the basic frame update decision circuit (J1) 26. Instead, a selector similar to the selector 33 in the embodiment of Fig. 13 is provided at the location indicated by a dotted circle S between an output of the frame memory 19 and the subtractor 1. That selector couples the subtractor 1 with an output of the basic frame memory 19 in an inter-mode, or null (ground) in an intra-mode.

The compression LSI chip can be used as compression means (25).

This compression LSI chip may be a conventional LSI commercially available for conventional MPEG2, MPEG4, and/or motion JPEG.

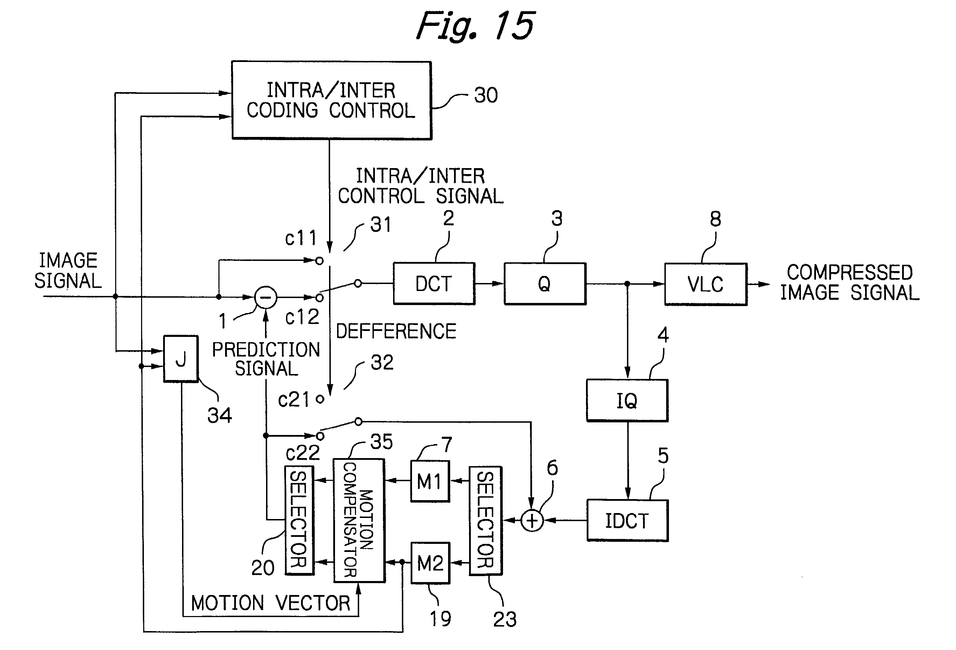

Fig. 15 is a block diagram of still another embodiment of an image compression system according to the present invention. The embodiment of Fig. 15 is a modification of the embodiment of Fig. 12. In Fig. 15, a subtractor 1, a discrete cosine transform (DCT) circuit 2, a quantizer 3, an inverse quantizer 4, an inverse discrete cosine transform (IDCT) circuit 5, an adder 6, an accumulated frame memory (M1) 7, a variable length coder 8, a basic frame memory (M2) 19, selectors 20 and 23, an intra/inter coding control 30, and switches 31 and 32 are the same as those shown in Fig. 12.

The feature of Fig. 15 is the presence of a motion estimator 34 for calculating motion vector based upon an input current image and a basic frame stored in the basic frame memory (M2) 19, and a motion compensator 35 for performing motion compensation to a basic frame according to motion vectors. An output of the motion compensator 35 is applied to the subtractor 1 as a prediction signal so that the subtractor 1 provides the difference between an input current image and the prediction signal with motion compensated. Thus, the image information is much compressed as compared with that of Fig. 12, as described in accordance with Fig. 11.

It should be appreciated that a motion compensation itself is conventional.

It should be noted that a selector 20 and a switch 32 may be replaced by a single selector, as is the case that the selector 20 and the switch 32 in Fig. 12 are replaced by the selector 33 in Fig. 13.

Further, a motion compensation system is optional in the technical standard H.261 which realizes a video conference system, and it is not essential to operate a motion compensation system. In the current embodiment, it may be possible not to operate a motion compensation system but carry out the decision of an intra-mode and an inter-mode of each macro-block, so that an input current image itself is compressed in an intra-mode, and a difference between a macro-block of an input current image and a corresponding macro-block of a basic frame is compressed in an inter-mode.

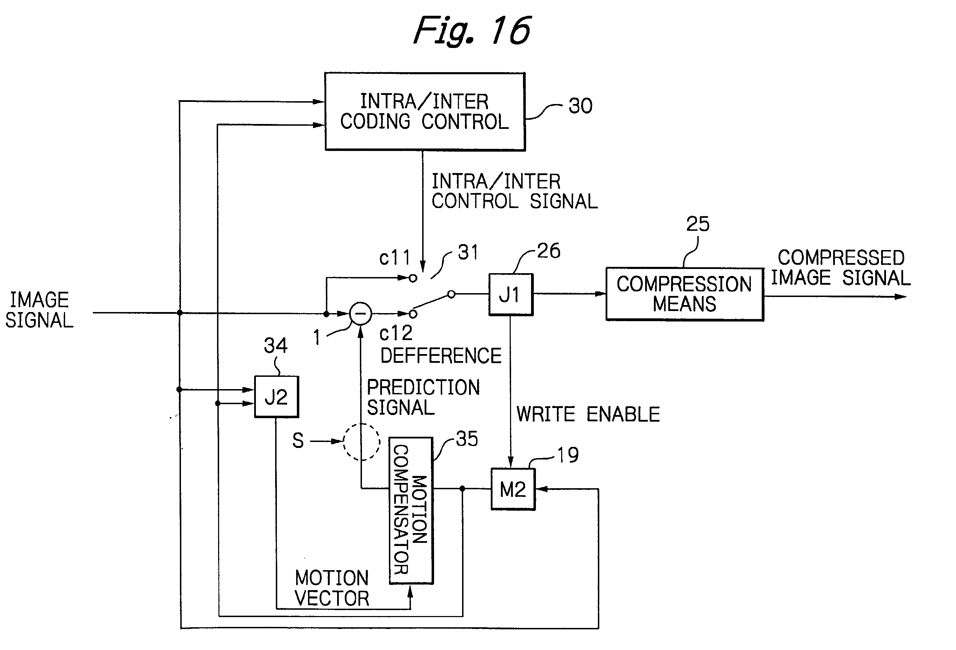

Fig. 16 is a block diagram of still another embodiment of an image compression system according to the present invention. Fig. 16 is a modification of Fig. 14, and most elements in Fig. 16 are the same as those in Fig. 14.

The feature of the Fig. 16 embodiment as compared with that of Fig. 14 is the presence of a motion estimator 34 for calculating a motion vector for each macro-block according to an input current image frame and a basic frame stored in the basic frame memory, and a motion compensator 35 for performing motion compensation to a basic frame by using motion vectors. The compression ratio is much improved by using a prediction signal of an output of the motion compensator 35 in taking the difference between an input current image and a prediction frame which is motion compensated, as compared with the embodiment of Fig. 14.

As a modification of Fig. 16, a switch 31 may be omitted so that an output of the subtractor 1 may be directly coupled with a basic frame update decision circuit 26, and a selector (like the selector 33 in Fig. 13) is provided at the location S between an output of the basic frame memory (M2) 19 and a subtractor 1 so that the selector provides an output of the basic frame memory 19 with motion compensated in an inter-mode to the subtractor 1, or zero in an intra-mode to the subtractor 1.

As described above, the difference is taken between an input image frame and a basic frame with motion compensation for each macro-block, thus, compression ratio is much improved as compared with the case with no motion compensation.

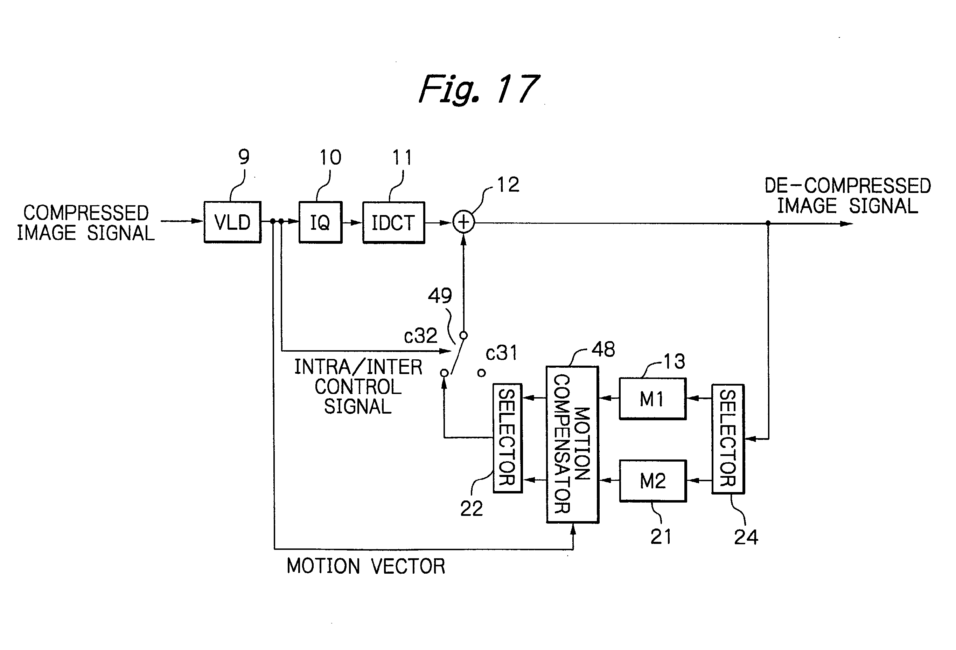

Fig. 17 is a block diagram of an image de-compression circuit according to the present invention. Fig. 17 is used to de-compress an image frame compressed by a compression circuit of Fig. 15.

In Fig. 17, a compressed receive image is applied to a variable length decoder 9 which provides a quantized signal. An inverse quantization circuit (IQ) 10 provides a DCT coefficient signal. An inverse discrete cosine transform circuit (IDCT) 11 provides a difference signal. An adder 12 provides a de-compressed frame signal by adding the output of the inverse discrete cosine transform circuit (IDCT) 11 and a previous frame which is an output of an accumulated frame memory (M1) 13 or a basic frame of an output of a basic frame memory (M2) 21, with motion compensation by a motion compensator 48. An output of the adder 12 is provided to an external circuit, and simultaneously, stored in the accumulated frame memory (M1) 13, or the basic frame memory (M2) 21. It is supposed that motion vectors used in the motion compensator 48 are separated from an input frame data, and applied to the motion compensator 48. A selector 22 selects one of the memories so that a basic frame memory (M2) 21 is selected when a receive signal is an I-picture of a difference signal subtracted by a basic frame with motion compensation by the motion compensator 35 (in Fig. 15), or an accumulative frame memory (M1) 13 is selected when a receive signal is a P-picture. A switch 49 is connected to a contact C31 only when an intra-mode signal (this means that no difference is taken) is received, in other cases, the switch 49 is connected to a contact C32 so that an output of the selector 22 is applied to the adder 12. The information whether a difference is taken or not, requested for the operation of the switch 49, is provided by an intra/inter control signal which is obtained by separating a received signal.

Thus, an image de-compression circuit in Fig. 17 de-compresses an image frame which is compressed by an image compression circuit in Fig. 15.

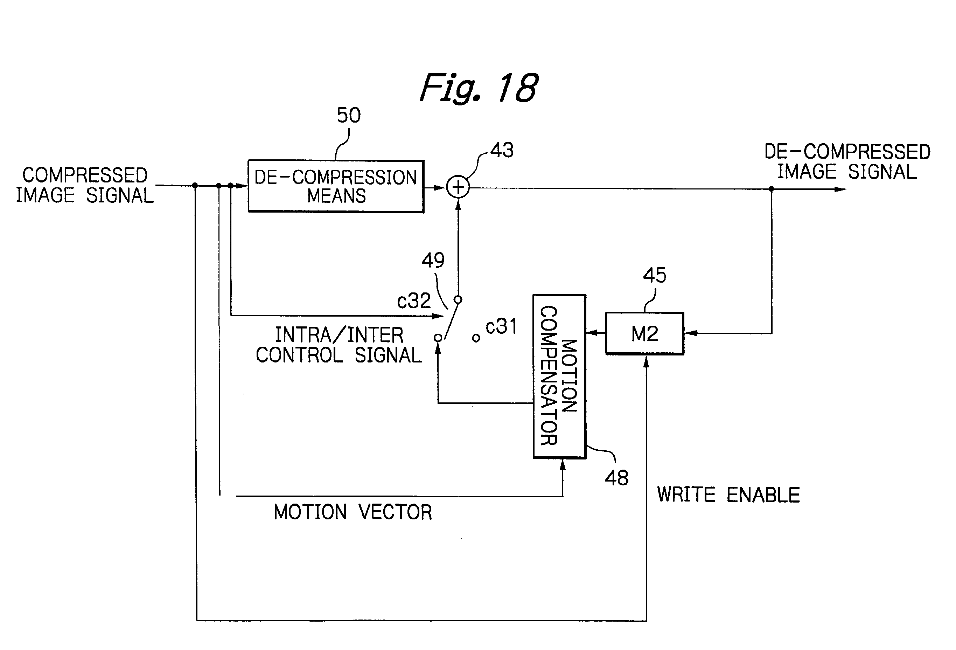

Fig. 18 is a block diagram of another image de-compression circuit according to the present invention. This de-compression circuit is used for de-compressing an image frame which is compressed by a compression circuit in Fig. 16.

In Fig. 18, received compressed frame is applied to an image de-compression means 50 which functions as an inverse quantizer and an inverse discrete cosine transform circuit. This circuit 50 provides a difference signal. It should be noted that no difference is taken in an intra-mode in a compression circuit, however, an output of the de-compression means 50 is called a difference signal for the sake of simplicity. An adder 43 provides a de-compressed frame signal by adding an output of the de-compression means 50 and a basic frame signal of an output of a basic frame memory (M2) 45 with motion compensation by a motion compensator 48. The de-compressed frame signal is output to an external circuit. It should be noted that motion vectors requested for motion compensation is separated from an input receive signal, and is applied to the motion compensator 48. A switch 49 is connected to a contact C31 when an intra-mode signal is received, that is to say, when a received signal is not a difference signal. In another case, a switch 49 is connected to a contact C32 so that an output of the motion compensator 48 is applied to the adder 43. The switch 49 is controlled by an intra-inter control signal which is separated from an input receive signal in order to indicate whether a difference is taken or not in a compression circuit. The basic frame memory 45 is updated by a write enable signal which is separated from an input receive signal.

Thus, according to a de-compression circuit in Fig. 18, a macro-block in which a difference is taken in a compression circuit is de-compressed by adding a de-compressed difference signal and a basic frame signal with motion compensation, and a macro-block in which no difference is taken in a compression circuit is de-compressed by a de-compressed signal itself.

In the embodiments of Figs. .17 and 18, a motion compensator 48 may be omitted. in that case, a compressed image signal compressed by a compression circuit in Fig. 12 or Fig. 13 is de-compressed by a de-compression circuit in Fig. 17 with no motion compensation. Similarly, a compressed image signal compressed by a compression circuit in Fig. 14 is de-compressed by a de-compression circuit in Fig. 18 with no motion compensation. In that case, a macro-block in which a difference is taken in a compression circuit is de-compressed by adding a de-compressed difference signal and a basic frame signal, and a macro-block in which no difference is taken in a compression circuit is de-compressed by a de-compressed signal itself.

Many modifications and alterations are possible to those skilled in the art. For instance, the present invention is applicable to image compression for not only transmission through a line, but also for recording/reproducing an image data.

As described above in detail, the present invention provides improved compression of image signal.

From the foregoing, it will now be apparent that a new and improved image compression system has been found. It should be understood of course that the embodiments disclosed are merely illustrative and are not intended to limit the scope of the invention. Reference should be made, therefore, to the appended claims to indicate the scope of the invention.

## Claims

1. Method for compressing a series of image frames including at least an I-picture and at least one P-picture following said I-picture comprising the steps of;
taking difference between a prediction frame and a current input frame,
processing the difference by a discrete cosine transform (DCT) circuit,
quantizing an output of the discrete cosine transform circuit and forwarding quantized frame as compressed signal,
inverse-quantizing said compressed signal,
processing an inverse-quantized signal by an inverse discrete cosine transform (IDCT) circuit,
adding an output of the inverse discrete cosine transform circuit to said prediction signal,
updating an accumulative frame memory as a next prediction frame by storing a sum of said addition into said accumulative frame memory,
**characterized in that**:
a basic frame memory storing a basic frame is provided for compressing said I-picture,
said basic frame memory is selected as said prediction frame when said I-picture is compressed, and said accumulative frame memory is selected as said prediction frame when said P-picture is compressed.

2. Method for de-compressing a series of image frames compressed according to claim 1, comprising the steps of;
inverse-quantizing a received compressed frame,
processing an inverse-quantized signal by an inverse discrete cosine transform (IDCT) circuit,
adding an output of the inverse discrete cosine transform circuit to an output of an accumulative frame memory when a P-picture is received, or to an output of a basic frame memory when an I-picture is received, so that a de-compressed frame is obtained,
updating said accumulative frame memory by a sum of an output of said adder.

3. Method for compressing a series of image frames according to claim 1, wherein said basic frame memory is updated by a sum of an output of said adder in every predetermined time, or when quantity of compressed data exceeds a predetermined threshold.

4. Method for de-compressing a series of images frames according to claim 2, wherein said basic frame memory is updated by a sum of an output of said adder when a basic frame memory in a compression circuit is updated.

5. Method for compressing a series of image frames according to claim 1 or 3, wherein a part of a frame is assigned to an intra-slice, location of said intra-slice in each frame is shifted for each frame so that a plurality of intra-slice areas cover a whole frame and function as an I-frame, compression of said intra-slice area is carried out by using said basic frame memory, and compression of other area is carried out by using said accumulative frame memory.

6. An image frame compressing circuit comprising;
a basic frame memory (19) for storing a basic frame,
an accumulative frame memory (7) for storing a prediction frame for compressing a P-picture,
a subtractor (1) for providing at least difference between an input P-picture and a prediction frame stored in said accumulative frame memory (7), and difference between an input I-picture and a basic frame stored in said basic frame memory (19),
compression means (2, 3) including a discrete cosine transform (DCT) circuit (2) for processing the difference of an output of said subtractor(1), and a quantizing means (3) for quantizing an output of said discrete cosine transform (DCT) circuit to provide compressed frame through a variable length coder (8),
de-compression means (4, 5) including an inverse-quantizing circuit (4) for inverse-quantizing said compressed frame, and an inverse discrete cosine transform (IDCT) circuit (5) for processing an output of said inverse-quantizing circuit,
an adder (6) for providing a sum of said prediction frame and an output of said inverse discrete cosine transform (IDCT) circuit (5),
a selector (20) for selecting one of said basic frame memory and said accumulative frame memory to provide said prediction frame.

7. An image frame compression circuit according to claim 6, further comprising another selector (23) for selectively storing an output of said adder (6) either to said basic frame memory (19) when said basic frame is updated, or to said accumulative frame memory (7) when said basic frame memory is not updated.

8. An image frame de-compressing circuit for de-compressing image frame compressed by said claim 6, comprising;
a basic frame memory (21) storing a basic frame,
an accumulative frame memory (13) storing a prediction frame,
de-compression means (10, 11) including an inverse-quantizer (10) for inverse-quantizing a received image frame and an inverse discrete cosine transform (IDCT) circuit (11) for processing an output of said inverse-quantizer,
an adder (12) for adding an output of said de-compression means (10, 11) selectively by using a selector (22) to one of outputs of said basic frame memory when an I-picture is received and said accumulative frame memory when a P-picture is received, so that a sum of the addition provides de-compressed frame, and
means for updating said accumulating frame memory (13) by an output of said adder (12).

9. An image frame de-compressing circuit according to claim 8, further comprising a selector (24) for selectively updating said basic frame memory (21) and said accumulative frame memory (13) by a sum of an output of said adder (12).

10. An image frame compressing circuit according to claim 6 or 7, further comprising;
an intra/inter coding control (30) for selecting one of an inter-mode which takes difference of a macroblock in a current frame and a corresponding macroblock in a basic frame and an intra-mode which takes no such difference, for each macroblock in a frame,
a first switch (31) for coupling an input to said quantizing means with an input image frame in case of said intra-mode, and an output of said subtractor in case of said inter-mode,
a second switch (32) for coupling one of inputs of said adder with null in case of said intra-mode, and said prediction frame in case of said inter-mode, so that information quantity of an output of compression means is smaller than an input frame, for each macroblock.

11. An image frame compressing circuit according to claim 6 or 7, further comprising;
an intra/inter coding control (30) for selecting one of an inter-mode which takes difference of a macroblock in a current frame and a corresponding macroblock in a basic frame and an intra-mode which takes no such difference, for each macroblock in a frame,
a selector (33) for coupling an input to said subtractor (1) with one selected from an output of said accumulative frame memory, an output of said basic frame memory, and null, and
said intra/inter coding control (30) making selector (33) select an output of said basic frame memory or said accumulative frame memory when inter-mode provides less information quantity of a current macroblock, or null when an intra-mode provides less information quantity of a current macroblock.

12. An image frame compressing circuit comprising;
a basic frame memory (19) for storing a basic frame,
a subtractor (1) for providing difference between an input frame and a basic frame read out of said basic frame memory (19),
an intra/inter coding control (30) for selecting one of an inter-mode which takes difference of a macroblock in a current frame and a corresponding macroblock in a basic frame and an intra-mode which takes no such difference, for each macroblock in a frame,
a switch (31) for selecting one of an input frame and an output of said subtractor (1) according to control by said intra/inter coding control (30),
a frame memory updating control (26) for updating said basic frame memory (19) when information quantity of a compressed data exceeds a predetermined threshold,
compression means (25) for discrete cosine transformation and quantization of a macroblock selected by said switch (31).

13. An image compressing circuit according to claim 10, 11 or 12, further comprising;
a motion estimator (34) receiving an input frame and a basic frame read out of said basic frame memory (19) for estimating a motion of each block between said input frame and said basic frame in order to provide a motion vector, and
a motion compensator (35) receiving said motion vector and said basic frame to provide a motion compensated basic frame to said subtractor (1).

14. An image compressing circuit according to one of claims 6, 7, 10-13 wherein said compression means (25) is implemented by a conventional image compression LSI.

15. An image de-compressing circuit according to claim 8 or 9, further comprising;
a switch (49) for supplying an output of said selector (22), or null to said adder (12), according to inter-mode or intra-mode for each macroblock in a related compression circuit.

16. An image frame de-compression circuit for de-compressing an image frame compressed by a compression circuit in claim 12, comprising;
a basic frame memory (45) storing a basic frame,
de-compression means (50) for inverse-quantization of a received frame and inverse discrete cosine transformation of inverse quantized frame,
an adder (43) for adding an output of said means (50) and a signal on a switch (49),
said switch (49) supplying an output of the basic frame memory (45) or null to said adder (43), according to inter-mode or intra-mode for each macroblock in said compression circuit.

17. An image de-compressing circuit according to claim 15 or 16 further comprising;
a motion compensator (48) for providing motion compensation for a basic frame read out of said basic frame memory (21, 45) according to a received motion vector.

18. An image de-compressing circuit according to claim 8, 9, 15, 16 or 17 wherein said de-compression means is implemented by a commercial image de-compression LSI.

19. Method for compressing a series of image frames according to one of claims 1, 3 and 5 wherein;
a frame is divided into a plurality of macroblocks,
said difference between a prediction frame and a current input frame is taken for each macroblock,
an intra/inter coding control for selecting one of an inter-mode which takes difference of a macroblock in a current frame and a corresponding macroblock in a prediction frame and an intra-mode which takes no such difference, for each macroblock in a frame, is provided,
said selection is carried out so that information quantity of an output of compression means is smaller than an input frame, for each macroblock,
said difference is processed for compression in an inter-mode, and a macroblock of said current input frame itself is processed for compression in an intra-mode.

20. Method for compressing a series of image frames according to claim 19, wherein motion compensation is carried out for a macroblock in said basic frame.

21. Method for de-compressing image frame compressed by said claim 19, according to one of claims 2 and 4, wherein information which is taken, an inter-mode or an intra-mode, is received from a compression side, and said addition is carried out only in said inter-mode.

22. Method for de-compressing image frame according to claim 21, wherein motion compensation is carried out for a macroblock in said basic frame.
